(19) Europäisches Patentamt
European Patent Office
Office européen des brevets

(11) **EP 2 592 743 B1**

(12) **FASCICULE DE BREVET EUROPEEN**

(45) Date de publication et mention de la délivrance du brevet:
**26.09.2018 Bulletin 2018/39**

(51) Int Cl.:
***H02M 3/158*** *(2006.01)*

(21) Numéro de dépôt: **11188922.6**

(22) Date de dépôt: **14.11.2011**

(54) **Convertisseur pour circuit électrique destiné à fournir de l'énergie électrique de propulsion à bord d'un véhicule automobile**

Umrichter für elektrischen Stromkreis zur Lieferung von elektrischer Antriebsenergie an Bord eines Kraftfahrzeugs

Converter for an electrical circuit designed to supply electrical propulsion power on board a motor vehicle

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**15.05.2013 Bulletin 2013/20**

(73) Titulaire: **Valeo Systèmes de Contrôle Moteur**
**95800 Cergy Saint Christophe (FR)**

(72) Inventeurs:
• **De Sousa, Luis**
**95670 Eragny Sur Oise (FR)**

• **Fall, Mame**
**65000 Tarbes (FR)**
• **Fontaine, Stéphane**
**92110 Clichy (FR)**

(74) Mandataire: **Argyma**
**36, rue d'Alsace Lorraine**
**31000 Toulouse (FR)**

(56) Documents cités:
**GB-A- 2 465 257     US-A1- 2009 237 044**

**Description**

*Domaine technique de l'invention*

La présente invention concerne un convertisseur pour circuit électrique destiné à fournir de l'énergie électrique de propulsion à bord d'un véhicule automobile.

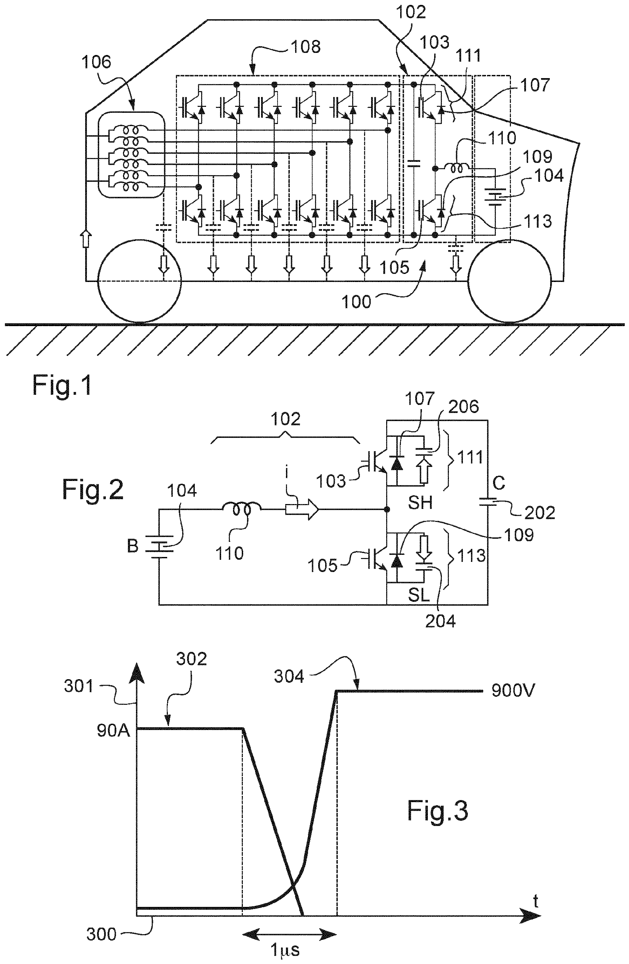

En référence à la figure 1 il est connu de munir un véhicule 100, à propulsion entièrement ou partiellement électrique, d'un convertisseur 102 de puissance capable d'élever la tension d'une batterie 104 pour alimenter une machine électrique 106, typiquement via des onduleurs 108.

Compte tenu des puissances mises en jeu dans un tel convertisseur 102, généralement comprises entre 20 et 100KW, il peut être intéressant de faire un convertisseur multicellulaire dans lequel un courant d'alimentation issu de la batterie 104 est réparti en de multiples cellules de conversion.

La mise en oeuvre d'un tel convertisseur multicellulaire est confrontée à un problème de coût compte tenu notamment de la quantité de silicium requis par des interrupteurs 111 et 113 mis en oeuvre dans une cellule, et notamment dans leurs transistors 103 ou 105 et leurs diodes de puissance 107 ou 109.

Dans le cas des véhicules électriques et plus particulièrement des véhicules hybrides, le volume et le poids de ces cellules sont également des critères importants et, notamment, la taille généralement importante des éléments inductifs - une bobine 110 dans cet exemple - devient problématique.

Le rendement est un autre critère important pour la mise en oeuvre d'un convertisseur puisque ce dernier influe directement dans l'autonomie du véhicule 100.

Afin d'accroître ce rendement, il est connu d'utiliser des cycles d'inversions du courant circulant dans l'élément inductif 110 du convertisseur afin de mettre en oeuvre un procédé de commutation dénommé ZVS, pour « Zero Voltage Switching » en anglais, comme décrit ci-dessous en référence aux figures 2 à 5.

Plus précisément, la figure 2 illustre une telle ouverture de l'interrupteur 113 du convertisseur 102 sous une tension pratiquement nulle obtenue grâce à un condensateur 204 puisque, comme décrit ultérieurement, ce condensateur 204 est déchargé lors de cette ouverture.

Bien que le courant 302 (figure 3) circulant dans le collecteur du transistor 105 ne soit pas totalement nul lorsque la tension 304 aux bornes dudit transistor 105 (tension collecteur/émetteur) commence à croître, ce procédé permet pratiquement de réduire fortement les pertes liées à une ouverture de l'interrupteur 105. Sur l'exemple de la figure 3, les ordres de grandeur en jeu sont indiqués en légende sur la figure.

Par la suite, le condensateur 204 peut être déchargé en inversant le courant i traversant l'élément inductif 110 de telle sorte que, le condensateur 204 étant ainsi déchargé, l'interrupteur peut de nouveau se fermer sous tension nulle.

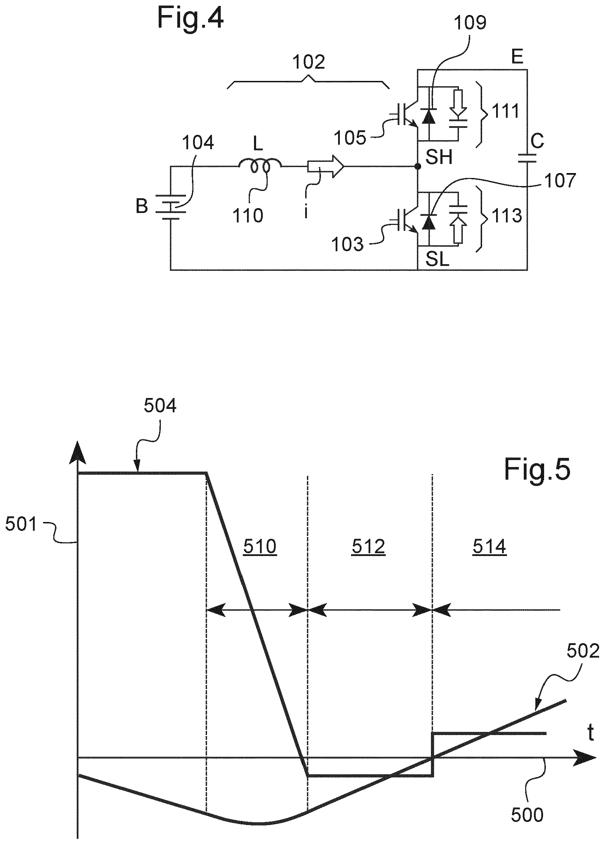

En référence à la figure 4 est représenté le convertisseur 102 lors d'une telle inversion du courant i traversant l'élément inductif 110 de la cellule, c'est-à-dire à l'ouverture de l'interrupteur 111. Le passage de courant à travers les interrupteurs 111 et 113 étant bloqué, le condensateur 204 se décharge puis, lorsqu'il est complètement déchargé, il met en conduction la diode 109 de l'interrupteur 113.

Dans ce cas, la tension 504 (figure 5) aux bornes de l'interrupteur 113 décroît rapidement pendant la décharge du condensateur (étape 510) puis devient négatif de telle sorte que la diode 109 (étape 512) devient passante.

Par la suite, le courant 502 dans l'élément inductif 110 redevient positif et le cycle reprend avec une ouverture de l'interrupteur 113 telle que précédemment décrite.

Si la mise en oeuvre de ce procédé ZVS avec une fréquence de découpage fixe peut être satisfaisante lorsque le convertisseur fonctionne à forte charge, il apparaît que cette technique ZVS ne permet pas un rendement satisfaisant à faible charge.

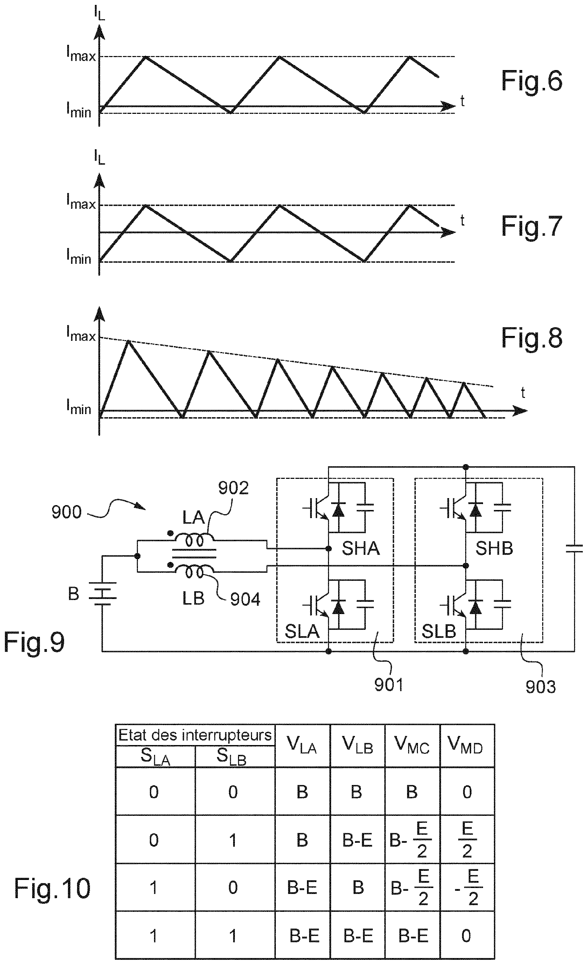

En effet, il apparaît de façon problématique que le courant est fortement modulé quelle que soit la charge, que ce soit à faible charge, c'est-à-dire lorsque le courant moyen est proche de 0 (figure 7) ou dans le cas d'une forte charge c'est-à-dire lorsque le courant moyen est, par exemple, proche de 50A (figure 6). Dans cet exemple, l'ondulation est de l'ordre de 100A de crête à crête, ce qui génère d'importantes pertes fer dans l'inductance.

Pour pallier ce problème, il est connu de mettre en oeuvre le procédé ZVS précédemment décrit selon un mode dit de conduction critique. Dans un tel mode, l'inversion du courant est forcée pendant un temps relativement court mais suffisant pour décharger le condensateur assurant la mise à zéro de la tension de l'interrupteur, comme représenté sur la figure 8.

Dans ce cas, le courant est contrôlé par un premier seuil qui règle la valeur moyenne du courant et par un second seuil, de signe opposé, qui permet d'assurer la décharge dudit condensateur, l'alternance entre ces deux seuils étant soumise à une fréquence variable.

De façon problématique, il apparaît que ce mode de conduction critique génère des ondulations de courant dans les éléments inductifs qui rendent difficiles la conception de ces derniers. De fait, l'amplitude des ondulations de courant peut être supérieure à 100% de la valeur du courant crête sur une plage de fréquence élevée (entre 20Khz à 80Khz par exemple) ce qui rend les pertes d'énergie dans l'inductance inacceptables en termes d'échauffement et de rendement.

Finalement, il convient de signaler que les éléments inductifs sont généralement fabriqués à base de matériaux de type ferrite ou nanocristallin du fait de la résistivité du matériau pour le premier, de la finesse des bandes constituant le noyau pour le second et de leur capacité commune à limiter la génération de courants de Foucault et donc de limiter les pertes.

Malheureusement, la ferrite est un matériau qui sature avec un champ magnétique relativement faible par rapport à d'autres matériaux magnétiques à base de fer.

La conséquence est le volume magnétique important requis pour la fabrication d'élément inductif, qui peut être rédhibitoire dans une application de véhicule hybride, ou du stockage d'énergie limité dans ces matériaux du fait de leur très grande perméabilité.

De fait, en termes de stockage d'énergie, les matériaux à base de fer et de silicium pourraient être plus adaptés aux convertisseurs de véhicule car leur seuil de saturation peut dépasser parfois 2 Teslas. En outre, ces matériaux sont très répandus dans le transport ou la transformation de l'énergie (transformateur, génératrice, moteur électrique...), généralement sous la forme de tôles laminées.

De façon problématique, ces matériaux ont un niveau élevé de pertes à haute fréquence compte tenu des modulations de flux générés par ces hautes fréquences. C'est pourquoi, les fréquences mises en oeuvre dans les transports d'énergie varient sur une plage de fréquences relativement basse, typiquement entre 50hz et 1Khz, avec des fréquences de découpage dépassant rarement la dizaine de kilohertz

Le document US2009/0237044 divulgue un circuit électrique destiné à fournir de l'énergie électrique de propulsion à bord d'un véhicule automobile, cette énergie électrique étant obtenue à partir d'énergie délivrée audit circuit électrique par une source de puissance en courant continu dudit véhicule et convertie par au moins deux cellules, comprenant des éléments inductifs reliés à des transistors gérant le courant circulant dans lesdits éléments inductifs, les éléments inductifs étant couplés de telle sorte qu'ils forment un circuit magnétique pouvant être commandé selon un mode différentiel où l'inductance apparente dudit circuit magnétique est de l'ordre de grandeur de l'inductance de fuite du couplage entre lesdits éléments inductifs couplés.

La présente invention vise à résoudre au moins un des problèmes précédemment cités. Elle vise à permettre l'utilisation d'un procédé ZVS en mode critique tout en utilisant des matériaux à forte saturation comme ceux à base de Fe-Si.

De fait, l'invention résulte de la constatation qu'il est possible de mettre en oeuvre un convertisseur pour véhicule automobile de façon à obtenir une modulation de courant, par cellule, suffisamment élevée pour mettre en oeuvre le procédé ZVS selon un mode en conduction critique tout en minimisant la modulation du flux dans le circuit magnétique de façon à limiter les pertes d'énergie et à permettre l'utilisation de matériaux à forte saturation, notamment à base de Fe-Si.

C'est pourquoi, la présente invention concerne un circuit électrique destiné à fournir de l'énergie de propulsion à bord d'un véhicule automobile, cette énergie électrique étant obtenue à partir d'énergie délivrée par une batterie dudit véhicule à au moins deux cellules, comprenant des éléments inductifs reliés à des transistors gérant le courant circulant dans lesdits éléments inductifs, caractérisé en ce que les éléments inductifs sont couplés de façon à former un circuit magnétique pouvant être alternativement commandé:

- selon un mode commun où une inductance apparente dudit circuit magnétique est de l'ordre de grandeur de la somme des inductances propres à chaque élément inductif, ou
- selon un mode différentiel où l'inductance apparente dudit circuit magnétique est de l'ordre de grandeur de l'inductance de fuite du couplage entre lesdits éléments inductifs couplés.

Grâce à l'invention, il est possible d'utiliser un circuit électrique comme convertisseur multicellulaire apte à mettre en oeuvre un procédé ZVS fonctionnant en mode critique car le couplage des éléments inductifs permet de réduire fortement les ondulations de flux dans l'ensemble du circuit magnétique - selon le mode différentiel - alors que les ondulations de courant dans chaque cellule sont maintenues relativement fortes - selon le mode commun.

De fait, l'invention utilise le couplage d'inductances pour former un circuit magnétique principal, servant à stocker de l'énergie, et un circuit dérivé créant des lignes de fuite avec une faible inductance permettant d'obtenir un courant fortement ondulé.

Grâce à l'invention, des matériaux qui n'auraient pas pu être utilisés dans ce type de convertisseur à hautes fréquences et fortes ondulations de courant peuvent être introduit sans générer des niveaux inacceptables de pertes « fer », c'est-à-dire de pertes dues à des ondulations ou modulations de flux. Ainsi, l'invention permet de réduire le volume des matériaux magnétiques mis en oeuvre dans des convertisseurs puisque ces derniers acceptent des inductions beaucoup plus élevées.

Outre les caractéristiques principales qui viennent d'être mentionnées, le circuit électrique selon l'invention peut comporter une ou plusieurs caractéristiques supplémentaires parmi les suivantes, considérées de manière isolée ou selon toutes les combinaisons techniques réalisables :

- les éléments inductifs sont couplés de telle sorte qu'ils présentent une borne commune, reliée à la batterie d'alimentation, et une borne reliée à un couple de transistor contrôlant la charge et la décharge d'un condensateur associé.
- le condensateur associé présente une borne partagée avec un premier couple de transistor d'une première cellule et une borne partagée avec un second couple de transistor de la seconde cellule.
- le circuit électrique comprend des moyens pour mettre en oeuvre un rapport cyclique de charge et de décharge du condensateur distinct de 50%.
- la valeur des inductances propres est de l'ordre de 500$\mu$H
- la valeur de l'inductance de fuite est de l'ordre de 50$\mu$H
- le circuit électrique comprend des moyens pour commander la décharge pendant une période suffisante pour inverser le courant circulant dans au moins un élément inductif selon, dans cet exemple, un procédé ZVS en mode critique.
- au moins un des éléments inductifs comprend un matériau à base de fer et de silicium, typiquement de la ferrite.
- le circuit électrique comprend un circuit magnétique formé par quatre demis-bobinage, entrelacés à des entrefers d'une même structure, de façon à former le couplage des deux éléments inductifs.

La présente invention se rapporte également à un procédé de fabrication d'un circuit électrique selon l'invention, destiné à fournir de l'énergie électrique de propulsion à bord d'un véhicule automobile, cette énergie électrique étant obtenue à partir d'énergie délivrée audit circuit électrique par une batterie dudit véhicule et convertie par au moins deux cellules, par exemple selon un procédé ZVS pour « Zéro Switching Value », comprenant des éléments inductifs reliés à des transistors gérant le courant circulant dans lesdits éléments inductifs, caractérisé en ce qu'on agence les éléments inductifs de façon à coupler ces derniers de telle sorte qu'ils forment un circuit magnétique tel que décrit ci-dessus.

D'autres caractéristiques et avantages de l'invention ressortiront clairement de la description qui en est donnée ci-dessous, à titre indicatif et nullement limitatif, en référence aux différentes figures annexées qui montrent :

- à la figure 1 déjà décrite, une vue schématique d'un véhicule à propulsion entièrement ou partiellement (hybride) électrique,
- aux figures 2 et 4 déjà décrites, des circuits électriques mis en oeuvre dans des convertisseurs électriques connus,
- aux figures 3 et 5, déjà décrites, des variations de courant et/ou de tension dans des convertisseurs électriques connus,
- aux figures 6, 7 et 8, déjà décrites, des variations de courant dans un convertisseur électrique connu,
- à la figure 9, un circuit électrique d'un convertisseur apte à mettre en oeuvre l'invention,
- à la figure 10, un tableau d'état d'interrupteurs mis en oeuvre dans le circuit de la figure 9,
- à la figure 11, une représentation selon le modèle de Hopkinson du circuit de la figure 9,
- aux figures 12 et 13, des variations respectivement de courant et de flux dans le circuit de la figure 9,
- à la figure 14, une vue en perspective d'un bobinage apte à mettre en oeuvre l'invention,
- à la figure 15, une représentation électrique du bobinage de la figure 14,
- à la figure 16, une variante du bobinage décrit à la figure 14,
- à la figure 17, une variante du circuit électrique décrit à la figure 9, et
- aux figures 18 et 19, des variations cycliques de tensions et de courants aux bornes d'éléments d'un convertisseur conforme à l'invention.

*Description des formes de réalisation préférées de l'invention*

Les éléments identiques, par structure ou par fonction, apparaissant sur différentes figures conservent, sauf précision contraire, les mêmes références.

En référence à la figure 9 est représenté un circuit magnétique 900 conforme à l'invention, c'est-à-dire comprenant deux cellules 901 ou 903 munies d'éléments inductifs respectifs 902 et 904 - représentés par des bobines - couplés de façon à pouvoir être alternativement commandé:

- selon un mode commun où une inductance apparente dudit circuit magnétique 900 est relativement forte, par exemple de l'ordre de grandeur de la somme des inductances $L_A$ et $L_B$ propres à chacun desdits éléments inductifs 902 et 904.

Grâce à une telle inductance apparente forte, les ondulations du flux magnétique dans le circuit sont limitées - comme décrit en détail ultérieurement - ce qui réduit les pertes fer.

- selon un mode différentiel où l'inductance apparente dudit circuit magnétique est relativement faible, par exemple de l'ordre de grandeur de l'inductance de fuite du couplage entre les éléments inductifs.

Grâce à une telle inductance apparente faible, le courant peut être inversé avec une ondulation suffisamment importante qui permette la mise en oeuvre du procédé ZVS précédemment décrit, notamment en mode critique.

Dans la description détaillée ci-dessous de cette mise en oeuvre, on dénomme par la suite LA et LB les inductances des éléments inductifs 902 ou 904 représentés par des bobines.

La tension Vmc du circuit magnétique en mode commun, dénommée par la suite tension de mode commun ou « Vmc », est la somme des tensions $V_{LA}$ ou $V_{LB}$ aux bornes des éléments inductifs 902 et 904.

$$Vmc = (V_{LA} + V_{LB})/2$$

De façon analogue, la tension Vmd du circuit magnétique en mode différentiel, dénommée par la suite tension de mode différentiel ou Vmd, est la différence des tensions $V_{LA}$ ou $V_{LB}$ aux bornes des éléments inductifs 902 et 904.

$$Vmd = (V_{LA} - V_{LB})/2$$

Cette tension Vmd en mode différentielle est non nulle lorsque les tensions $V_{LA}$ ou $V_{LB}$ aux bornes des deux éléments inductifs diffèrent. En considérant une application telle que représentée sur la figure 9 avec deux cellules, cette situation se produite lorsque les interrupteurs $S_{LA}$ ou $S_{LB}$ des cellules 901 ou 903 mettant en oeuvre ces éléments inductifs sont dans des états distincts comme indiqués dans le tableau de la figure 10.

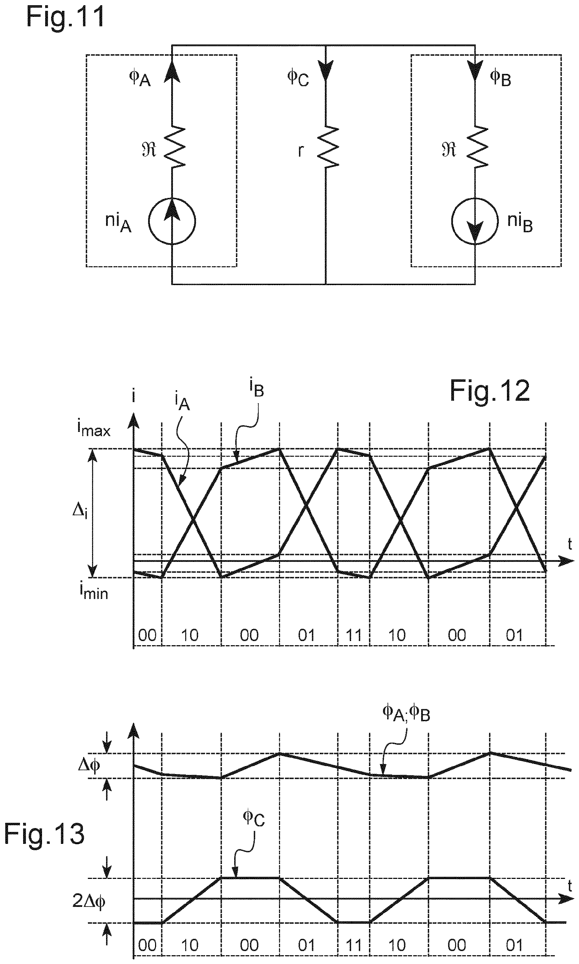

Pour plus de clarté, il est possible d'utiliser une représentation du circuit magnétique 900 selon la méthode de Hopkinson (figure 11). Dans ce cas, l'élément inductif 902 est représenté par une reluctance R et un générateur $ni_A$ de courant $i_A$, l'élément inductif 904 est représenté par une reluctance R et un générateur $ni_B$ de courant $i_B$ et, finalement, le couplage entre les deux éléments inductifs 902 et 004 est équivalent à un élément inductif 906 représenté par une reluctance r.

Les flux magnétiques $\varnothing_A$, $\varnothing_B$ ou $\varnothing_C$ générés respectivement par chacun des éléments inductifs 902, 904 ou par le couplage de ces derniers peuvent être déterminés au moyen des formules suivantes:

$$\varnothing_A /N = L_A i_A + M i_B$$

$$\varnothing_B /N = L_B i_B + M i_A$$

$$\varnothing_C = \varnothing_A - \varnothing_B$$

Dans l'invention proposée, les éléments inductifs sont fortement couplés et la valeur de l'inductance mutuelle M est positive et de l'ordre de 450μH et l'inductance L est de l'ordre de 500μH.

Typiquement, cette inductance mutuelle M a une valeur proche de l'inductance propre $L_A$ ou $L_B$ de chaque bobine. Par la suite, ces inductances propres $L_A$ et $L_B$ sont considérées identiques et égales à une inductance L.

L'inductance de fuite, égale à la différence entre l'inductance propre et l'inductance mutuelle, est donc relativement faible et dénommée par la suite inductance de fuite Lf. On a alors :

$$\varnothing_A /N = L(i_A + i_B) - Lf i_B$$

$$\varnothing_B /N = L(i_A + i_B) - Lf i_A$$

$$\varnothing_C /N = Lf (i_A - i_B)$$

A partir de ces dernières équations, la valeur de la tension en mode commun Vmc devient:

$$Vmc = N[(d\varnothing_A/dt)+(d\varnothing_B/dt)]/2 = (2L-Lf)[(di_A/dt)+(di_B/dt)]/2 = (2L-Lf)\ (di_{MC})/dt$$

De même, à partir de ces mêmes équations précédentes, la valeur de la tension en mode différentiel Vmd devient :

$$Vmd = N[(d\varnothing_A/dt)-(d\varnothing_B/dt)]/2 = (Lf)\ [(di_A/dt)-(di_B/dt)]/2 = Lf\ (di_{MC})/dt$$

Comme précédemment indiqué, l'inductance de fuite Lf est pratiquement négligeable vis-à-vis de l'inductance propre L de chaque élément inductif. Dans ce cas, les tensions en mode commun Vmc ou en mode différentielle deviennent :

$$Vmc = 2L\ (di_{MC})/dt$$

$$Vmd = Lf\ (di_{MC})\ /\ dt$$

Il apparaît alors que l'inductance du circuit magnétique en mode différentiel est de l'ordre de l'inductance de fuite tandis que l'inductance de ce même circuit magnétique en mode commun est de l'ordre de la somme des inductances propres. Dès lors :

- En mode différentiel, une telle inductance de fuite relativement faible permet au courant de varier rapidement, par exemple dix fois plus vite que si l'on employait l'inductance propre, comme montré sur la figure 12 ; tandis que
- En mode commun, une telle inductance propre relativement élevée permet d'assurer des ondulations de flux relativement faibles. De fait, les flux magnétiques sont donnés par :

$$\varnothing_A\ /N = L(i_A + i_B) - Lfi_B = 2\ Li_{MC} - Lfi_B$$

$$\varnothing_B\ /N = L(i_A + i_B) - Lfi_A = 2\ Li_{MC} - Lfi_A$$

$$\varnothing_c\ /N = Lf\ (i_A - i_B) = 2\ Lfi_{MD}$$

Etant donné que l'inductance de fuite est relativement faible, la dérivation des équations précédentes aboutit aux équations ci-dessous:

$$\Delta\varnothing_A\ /N = -Lf(\Delta i_B)$$

$$\Delta\varnothing_B\ /N = Lf\Delta i_A$$

$$\Delta\varnothing_c\ /N = 2\ Lfi_A$$

En d'autres termes, les ondulations de flux sont proportionnelles à l'inductance de fuite qui, étant relativement faible, impose des ondulations également faibles comme représentées sur la figure 13. Ces ondulations sont ici environ 10 fois plus faibles que les ondulations obtenues sans le couplage des selfs.

Plus précisément, il est possible d'évaluer le taux d'ondulation par rapport au champ magnétique crête en sachant que l'ondulation du courant est pratiquement égale au courant crête dans le mode de conduction critique. Dans ce cas, ce rapport devient :

$$\Delta\varnothing_A / \varnothing_A = -Lf\Delta i_B/(2\, Li_{MC} - Lfi_B) \approx -Lf\Delta i_B/2\, Li_{MC} = -\, Lf/L$$

$$\Delta\varnothing_B / \varnothing_B = Lf\Delta i_A/(2\, Li_{MC} - Lfi_A) \approx Lf\Delta i_A/2\, Li_{MC} = \, Lf/L$$

$$\Delta\varnothing_c / \varnothing_C = 2\, Lf\, \Delta i_A/(2\, Lf\, i_{MD}) \approx 2\, L/Lf$$

Le calcul précédent montre que le taux d'ondulation est pratiquement égal au rapport entre l'inductance de fuite et l'inductance propre aux éléments inductifs, ce rapport pouvant alors être suffisamment faible pour permettre l'utilisation de matériaux à base de Fe-Si.

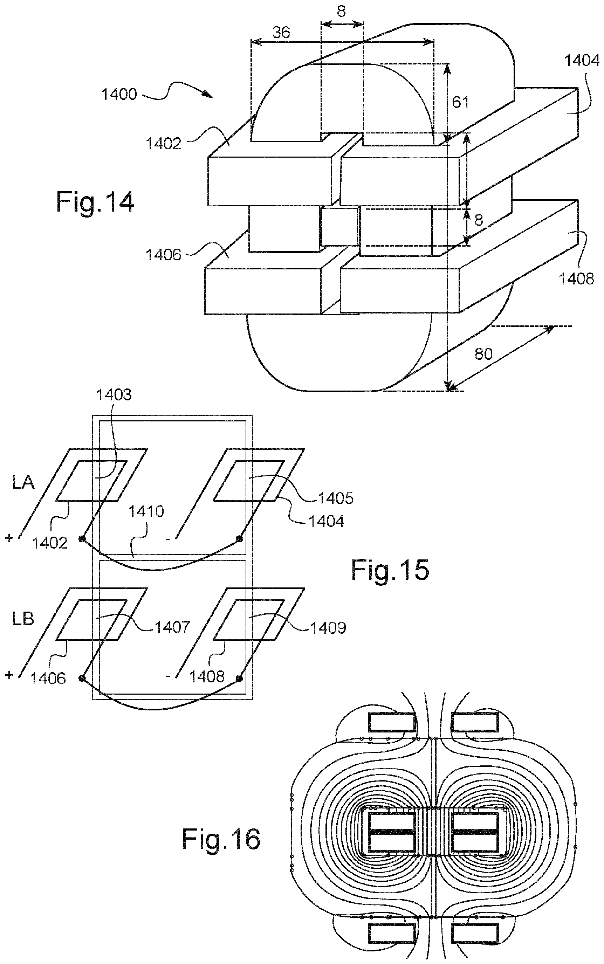

En référence à la figure 14, un circuit magnétique 1400 conforme à l'invention peut être mis en oeuvre au moyen de quatre demis bobines 1402, 1404, 1406 et 1408 à N tours, entourant chacune un entrefer 1403, 1405, 1407 ou 1409 (figure 15) permettant le réglage de l'inductance propre à chaque élément inductif, ainsi qu'une jambe centrale 1410.

Cette jambe centrale 1400 subie deux fois plus de variations de flux magnétique que les bras externes. C'est pourquoi, il convient qu'elle soit la plus courte possible afin de limiter les pertes fer du fait de ces variations de flux magnétique qui sont proportionnelles au volume de ladite jambe centrale.

Par ailleurs, il convient de noter que la longueur de cette jambe centrale 1400 n'a pas d'effet sur le fonctionnement du circuit magnétique, son inductance étant dépendante de la section de la jambe et de l'entrefer.

Les bobines à N tours sont enroulées autour des entrefers pour limiter le rayonnement magnétique causé par les lignes de flux qui s'écartent au niveau de l'entrefer, ce dernier pouvant être en matériau ferrite Fe-Si afin de stocker de l'énergie.

La bobine peut être constituée de bandes conductrices ou de fil monobrin ou multibrin, le sens de bobinage des enroulements A et B étant tel que les forces magnétomotrices (ampères-tours) de chacun des enroulements s'ajoutent. La figure 15, qui représente ce circuit magnétique de la figure 14, montre ainsi le sens des enroulements autour des entrefers.

La présente invention est susceptible de nombreuses variantes. Notamment, la description du problème et de l'invention ont été principalement effectuées en utilisant des convertisseurs, bidirectionnel abaisseur ou élévateur de tension, non isolé du type Buck Boost. Toutefois, il est clair que l'invention peut être mise en oeuvre avec différents types de convertisseur comprenant au moins deux cellules dont les éléments inductifs peuvent être couplés.

Par ailleurs, il convient de signaler que l'invention peut être mise en oeuvre avec une fréquence fixe ou variable. En effet, le convertisseur peut fonctionner en redressement synchrone. Dans ce cas, la fréquence et les inductances doivent être calculées pour que, même à courant maximal, le courant s'inverse dans les inductances afin que le procédé de ZVS puisse être utilisé.

Concernant la mise en oeuvre d'un circuit magnétique, il est clair que la structure de la bobine, notamment la localisation des entrefers, la présence d'une jambe centrale 1410 et le matériau mis en oeuvre pour ces derniers peuvent varier d'une réalisation de l'invention à une autre.

De fait, dans une réalisation représentée par des lignes de champs à la figure 16 et les entrefers, une bobine 1600 est dépourvue de jambe centrale et utilise un noyau en forme de C.

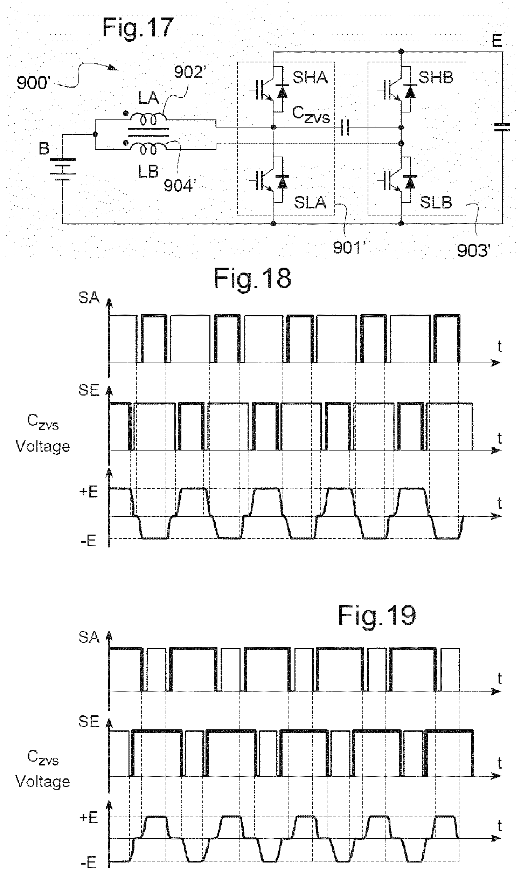

En référence à la figure 17 est représenté un circuit électrique 900' optimisé de façon à requérir un unique condensateur, de valeur 2C, au lieu des 4 condensateurs de valeur C utilisés dans le circuit de la figure 9.

Cette utilisation d'un seul condensateur pour effectuer le procédé ZVS est possible par un choix du mode de conduction. Etant donné qu'à tout instant un des deux interrupteurs de chaque bras est en conduction, on est certain qu'à l'ouverture d'un interrupteur, le courant de l'inductance est absorbé par le condensateur qui est relié soit à une masse soit à un bus continu E.

Si le rapport cyclique est inférieur à 50% (figure 18) lors de l'ouverture de l'interrupteur SLA, l'interrupteur SHB est en conduction. Le condensateur Czvs est alors polarisé sous une tension négative (-E).

Lors de l'ouverture de l'interrupteur SLA, le condensateur Czvs se décharge complètement et la tension de blocage de l'interrupteur SLA vaut E comme représenté sur la figure 18.

Avant que l'interrupteur SLB ferme, le courant est négatif dans l'élément inductif LB et l'interrupteur SHB s'ouvre de telle sorte que le courant forcé par cet élément inductif LB charge la capacité Czvs jusqu'à ce que la tension du bus continu soit atteinte.

De manière analogue, la figure 19 se réfère au cas ou le rapport cyclique est supérieur à 50%.

**Revendications**

1. Circuit électrique (900, 900') destiné à fournir de l'énergie électrique de propulsion à bord d'un véhicule automobile, cette énergie électrique étant obtenue à partir d'énergie délivrée audit circuit électrique (900, 900') par une batterie dudit véhicule et convertie par au moins deux cellules (901, 903; 901', 903'), comprenant des éléments inductifs (902, 904; 902', 904') reliés à des transistors gérant le courant circulant dans lesdits éléments inductifs (902, 904 ; 902', 904'), les éléments inductifs (902, 904 ; 902', 904') étant couplés de telle sorte qu'ils forment un circuit magnétique (1400) pouvant être alternativement commandé:

  - selon un mode commun où une inductance apparente dudit circuit magnétique (1400) est de l'ordre de grandeur de la somme des inductances propres à chaque élément inductif, ou
  - selon un mode différentiel où l'inductance apparente dudit circuit magnétique (1400) est de l'ordre de grandeur de l'inductance de fuite du couplage entre lesdits éléments inductifs couplés.

2. Circuit électrique (900, 900') selon la revendication 1 **caractérisé en ce que** les éléments inductifs sont couplés de telle sorte qu'ils présentent une borne commune, reliée à la batterie d'alimentation, et une borne reliée à un couple de transistor contrôlant la charge et la décharge d'un condensateur associé.

3. Circuit électrique (900, 900') selon la revendication 2 **caractérisé en ce que** le condensateur associé présente une borne partagée avec un premier couple de transistor d'une première cellule (901, 903) et une borne partagée avec un second couple de transistor de la seconde cellule (901', 903').

4. Circuit électrique (900, 900') selon la revendication 3 **caractérisé en ce qu'**il comprend des moyens pour mettre en oeuvre un rapport cyclique de charge et de décharge du condensateur distinct de 50%.

5. Circuit électrique (900, 900') selon l'une des revendications précédentes **caractérisé en ce que** l'ordre de grandeur des inductances propres est de $500\mu H$.

6. Circuit électrique (900, 900') selon l'une des revendications précédentes **caractérisé en ce que** l'ordre de grandeur de l'inductance de fuite est de $50\mu H$.

7. Circuit électrique (900, 900') selon l'une des revendications précédentes **caractérisé en ce qu'**il comprend des moyens pour commander la décharge pendant une période suffisante pour inverser le courant circulant dans au moins un élément inductif (902, 904 ; 902', 904') selon un procédé ZVS en mode critique.

8. Circuit électrique (900, 900') selon l'une des revendications précédentes **caractérisé en ce qu'**au moins un des éléments inductifs comprend un matériau à base de fer et de silicium, typiquement de la ferrite.

9. Circuit électrique (900, 900') selon l'une des revendications précédentes **caractérisé en ce qu'**il comprend un circuit magnétique formé par quatre demis-bobinage, entrelacés à des entrefers d'une même structure, de façon à former le couplage des deux éléments inductifs.

10. Circuit électrique selon l'une des revendications précédentes **caractérisé en ce que** le circuit magnétique comprend une bobine (1600) dépourvue de jambe centrale et utilisant un noyau en forme de C.

11. Procédé de fabrication d'un circuit électrique (900, 900') destiné à fournir de l'énergie électrique de propulsion à bord d'un véhicule automobile, cette énergie électrique étant obtenue à partir d'énergie délivrée audit circuit électrique (900, 900') par une batterie dudit véhicule et convertie par au moins deux cellules (901, 903 ; 901', 903'), comprenant des éléments inductifs (902, 904 ; 902', 904') reliés à des transistors gérant le courant circulant dans lesdits éléments inductifs (902, 904 ; 902', 904'), les éléments inductifs étant agencé (902, 904 ; 902', 904') de façon à coupler ces derniers de telle sorte qu'ils forment un circuit magnétique conforme à l'une des revendications précédentes.

**Patentansprüche**

1. Elektrischer Stromkreis (900, 900') zur Lieferung von elektrischer Antriebsenergie an Bord eines Kraftfahrzeugs, wobei diese elektrische Energie aus Energie erhalten wird, die dem elektrischen Stromkreis (900, 900') von einer Batterie des Fahrzeugs bereitgestellt und von mindestens zwei Zellen (901, 903; 901', 903') umgewandelt wird, umfassend induktive Elemente (902, 904; 902', 904'), verbunden mit Transistoren, die den Strom, der in den induktiven Elementen (902, 904; 902', 904') fließt, verwalten, wobei die induktiven Elemente (902, 904; 902', 904') derart gekoppelt sind, dass sie einen Magnetkreis (1400) bilden, der abwechselnd steuerbar ist:

- gemäß einem gemeinsamen Modus, wobei eine scheinbare Induktivität des Magnetkreises (1400) der Größenordnung der Summe der Eigeninduktivitäten jedes induktiven Elements entspricht, oder
- gemäß einem differentiellen Modus, wobei die scheinbare Induktivität des Magnetkreises (1400) der Größenordnung der Streuinduktivität der Kopplung zwischen den gekoppelten induktiven Elementen entspricht.

2. Elektrischer Stromkreis (900, 900') nach Anspruch 1, **dadurch gekennzeichnet, dass** die induktiven Elemente derart gekoppelt sind, dass sie eine gemeinsame Klemme darstellen, die mit der Versorgungsbatterie verbunden ist, und eine Klemme, die mit einem Transistorpaar verbunden ist, welches das Laden und das Entladen eines zugeordneten Kondensators steuert.

3. Elektrischer Stromkreis (900, 900') nach Anspruch 2, **dadurch gekennzeichnet, dass** der zugeordnete Kondensator eine Klemme darstellt, geteilt mit einem ersten Transistorpaar einer ersten Zelle (901, 903), und eine Klemme, geteilt mit einem zweiten Transistorpaar der zweiten Zelle (901', 903').

4. Elektrischer Stromkreis (900, 900') nach Anspruch 3, **dadurch gekennzeichnet, dass** er Mittel umfasst, um ein zyklisches Lade- und Entladeverhältnis des verschiedenen Kondensators von 50 % umzusetzen.

5. Elektrischer Stromkreis (900, 900') nach einem der vorangehenden Ansprüche, **dadurch gekennzeichnet, dass** die Größenordnung der Eigeninduktivitäten 500 $\mu$H beträgt.

6. Elektrischer Stromkreis (900, 900') nach einem der vorangehenden Ansprüche, **dadurch gekennzeichnet, dass** die Größenordnung der Streuinduktivitäten 50 $\mu$H beträgt.

7. Elektrischer Stromkreis (900, 900') nach einem der vorangehenden Ansprüche, **dadurch gekennzeichnet, dass** er Mittel zum Steuern der Entladung während eines Zeitraums umfasst, der ausreichend ist, um den Strom umzukehren, der in mindestens einem induktiven Element (902, 904; 902', 904') fließt, gemäß einem ZVS-Verfahren im kritischen Modus.

8. Elektrischer Stromkreis (900, 900') nach einem der vorangehenden Ansprüche, **dadurch gekennzeichnet, dass** mindestens eins der induktiven Elemente ein Material auf der Basis von Eisen und von Silizium, in typischer Weise Ferrit, umfasst.

9. Elektrischer Stromkreis (900, 900') nach einem der vorangehenden Ansprüche, **dadurch gekennzeichnet, dass** er einen Magnetkreis umfasst, gebildet von vier Halbwicklungen, die mit Spalten einer selben Struktur derart verschlungen sind, dass die Kopplung der zwei induktiven Elemente gebildet wird.

10. Elektrischer Stromkreis nach einem der vorangehenden Ansprüche, **dadurch gekennzeichnet, dass** der Magnetkreis eine Wicklung (1600) ohne zentralen Schenkel umfasst und einen C-förmigen Kern verwendet.

11. Verfahren zur Herstellung eines elektrischen Stromkreises (900, 900') zur Lieferung von elektrischer Antriebsenergie an Bord eines Kraftfahrzeugs, wobei diese elektrische Energie aus Energie erhalten wird, die dem elektrischen Stromkreis (900, 900') von einer Batterie des Fahrzeugs bereitgestellt und von mindestens zwei Zellen (901, 903; 901', 903') umgewandelt wird, umfassend induktive Elemente (902, 904; 902', 904'), verbunden mit Transistoren, die den Strom, der in den induktiven Elementen (902, 904; 902', 904') fließt, verwalten, wobei die induktiven Elemente (902, 904; 902', 904') derart ausgebildet sind, dass sie diese Letzteren derart koppeln, dass sie einen Magnetkreis nach einem der vorangehenden Ansprüche bilden.

**Claims**

1. Electrical circuit (900, 900') configured to supply electrical propulsion energy on board a motor vehicle, this electrical energy being obtained from energy delivered to said electrical circuit (900, 900') by a battery of said vehicle and converted by at least two cells (901, 903; 901', 903'), including inductive elements (902, 904; 902', 904') connected to transistors managing the current circulating within said inductive elements (902, 904; 902', 904'), the inductive elements (902, 904; 902', 904') being coupled in such a way that they form a magnetic circuit (1400) being able to be alternatively driven:

- according to a common mode where the inductance belonging to said magnetic circuit (1400) is of the order of magnitude of the sum of the inductance of each inductive element, or
- according to a differential mode where the inductance of said magnetic circuit (1400) is of the order of magnitude of the coupling leakage inductance between said coupled inductive elements.

2. Electrical circuit (900, 900') according to claim 1 **characterised in that** the inductive elements are coupled in such a way that they present a common terminal, connected to the supply battery, and a terminal connected to a transistor couple controlling the charge and discharge of an associated capacitor.

3. Electrical circuit (900, 900') according to claim 2 **characterised in that** the associated capacitor presents a terminal shared with a first transistor couple of a first cell (901, 903) and a terminal shared with a second transistor couple of the second cell (901', 903').

4. Electrical circuit (900, 900') according to claim 3, **characterised in that** it comprises the means to implement a duty cycle for the charging and discharging of the capacitor distinct from 50%.

5. Electrical circuit (900, 900') according to one of the previous claims **characterised in that** the order of magnitude of the capacitance is 500 $\mu$H.

6. Electrical circuit (900, 900') according to one of the previous claims **characterised in that** the order of magnitude the leakage capacitance is 50 $\mu$H.

7. Electrical circuit (900, 900') according to one of the previous claims **characterised in that** it comprises the means for controlling the discharge during a period sufficiently long to reverse the current circulating in at least one inductive element (902, 904; 902', 904') according to the ZVS process in critical mode.

8. Electrical circuit (900, 900') according to one of the previous claims **characterised in that** at least one of the inductive elements includes material based on iron and silicon, typically ferrite.

9. Electrical circuit (900, 900') according to one of the previous claims **characterised in that** it includes a magnetic circuit formed by four half coils, interwoven to cores with similar structure in such a manner as to form the coupling of the two inductive elements.

10. Electrical circuit according to one of the previous claims **characterised in that** the magnetic circuit includes a coil (1600) without a central leg and using a core in the form of a C.

11. Fabrication process for an electrical circuit (900, 900') configured to supply electrical propulsion energy on board a motor vehicle, this energy being obtained from energy delivered to said circuit (900, 900') by a battery of said vehicle and converted by at least two cells (901, 903; 901', 903'), including inductive elements (902, 904; 902', 904') connected to transistors managing the current circulating in said inductive elements (902, 904; 902', 904') being arranged in such a way as to couple these latter in such a way that they form a magnetic circuit conform to one of the previous claims.

**Fig.1**

**Fig.2**

**Fig.3**

# Fig.4

# Fig.5

Fig.6

Fig.7

Fig.8

Fig.9

| Etat des interrupteurs | | $V_{LA}$ | $V_{LB}$ | $V_{MC}$ | $V_{MD}$ |
|---|---|---|---|---|---|
| $S_{LA}$ | $S_{LB}$ | | | | |
| 0 | 0 | B | B | B | 0 |
| 0 | 1 | B | B-E | $B-\dfrac{E}{2}$ | $\dfrac{E}{2}$ |
| 1 | 0 | B-E | B | $B-\dfrac{E}{2}$ | $-\dfrac{E}{2}$ |
| 1 | 1 | B-E | B-E | B-E | 0 |

Fig.10

Fig.11

Fig.12

Fig.13

Fig.14

Fig.15

Fig.16

# Fig.17

# Fig.18

# Fig.19

**EP 2 592 743 B1**

## RÉFÉRENCES CITÉES DANS LA DESCRIPTION

**Documents brevets cités dans la description**

- US 20090237044 A